# EUROPEAN PATENT APPLICATION

(11) **EP 4 282 903 A1**
(43) Date of publication of application: **29.11.2023**
(21) Application number: 22742447.0
(22) Date of filing: 11.01.2022
(51) Int. Cl.: C08G 75/08, G02B 1/00, G02B 1/04

(54) **PHOTOCURABLE COMPOSITION, CURED PRODUCT THEREOF, AND OPTICAL MATERIAL CONTAINING SAID CURED PRODUCT**

(30) Priority: 22.01.2021 JP 2021008742
(71) Applicant: MITSUBISHI GAS CHEMICAL COMPANY, INC., Chiyoda-ku Tokyo 100-8324 (JP)
(72) Inventor: KINJO Kota, Yokkaichi-shi, Mie 510-0886 (JP); NAMIKI Kosuke, Tokyo 125-8601 (JP); FURUKAWA Kikuo, Tokyo 125-8601 (JP); KOSHIISHI Eiji, Kamisu-shi, Ibaraki 314-0102 (JP)
(74) Representative: Hoffmann Eitle
(86) International application number: PCT/JP2022/000467
(87) International publication number: WO 2022/158324

(57) **Abstract**

According to the present invention, there can be provided a photocurable composition comprising a sulfur (a) having a cyclic structure represented by the following formula (1), an episulfide compound (b), and a photopolymerization initiator (c), wherein the content of the sulfur (a) is 1 to 28 parts by mass, with respect to the total mass (100 parts by mass) of the sulfur (a) and the episulfide compound (b):

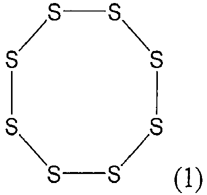

## Description

### Technical Field

The present invention relates to a photocurable composition useful for producing optical materials such as adhesives for optical elements, coating agents for optical elements, resist materials, prisms, optical fibers, information recording substrates, filters, and light guide plates.

### Background Art

In recent years, plastic materials have been widely used for various types of optical materials because of their light weight, high toughness, and easy stainability. One of performances required for many optical materials is a high refractive index. With regard to optical materials having a high refractive index, a large number of episulfide compounds that enable optical materials with a refractive index of 1.7 or more have been found (see Patent Literatures 1,2, and 3). As another method of achieving a high refractive index in plastic materials, a method of dispersing inorganic particles in an organic resin has been well known. However, according to such a method, light scattering of the particles cannot be completely avoided, and cloudiness is thereby generated. Thus, from the viewpoint of light transmittance, a method using an episulfide compound is preferable.

Since almost of all methods of curing a composition using an episulfide compound are thermal curing methods, there is a major limitation in the application of the methods. In addition, in order to improve productivity, it has been strongly desired to develop a light curable composition. For example, in order to impart optical functions onto transparent substrates having a reflective index of more than 1.73, such as lanthanum glass or sapphire glass, it has been desired to develop a photocurable composition having a reflective index of more than 1.73 and being capable of forming a microstructure.

Patent Literature 4 reports a high refractive index resin cured product prepared by the photocuring of an episulfide composition containing a photobase generator.

As a method of obtaining a resin cured product having a higher refractive index, a method of copolymerizing sulfur and an episulfide compound has been known. Patent Literature 5 reports that a transparent resin having a refractive index of more than 1.73 can be obtained by the thermosetting of an episulfide compound containing sulfur. However, it has been generally difficult to use sulfur for a photocurable composition having a high refractive index. This is because sulfur inhibits photocuring due to its strong UV absorption. Patent Literature 6 reports that a photocurable composition having a high refractive index can be obtained by avoiding the use of sulfur and using a cyclic polysulfide compound with low UV absorption as an alternative. However, the refractive index of the obtained photocurable composition is inferior to that of the resin obtained in Patent Literature 5.

### Citation List

### Patent Literature

Patent Literature 1: JP Patent Publication (Kokai) No. H09-71580 A (1997)
Patent Literature 2: JP Patent Publication (Kokai) No. H09-110979 A (1997)
Patent Literature 3: JP Patent Publication (Kokai) No. H09-255781 A (1997)
Patent Literature 4: JP Patent Publication (Kokai) No. 2011-38050 A
Patent Literature 5: Japanese Patent No. 3738817
Patent Literature 6: JP Patent Publication (Kokai) No. 2015-255 A

### Summary of Invention

### Technical Problem

It is an object of the present invention to provide a photocurable composition having a higher refractive index, a cured product thereof, and an optical material comprising the cured product.

### Solution to Problem

As a result of intensive studies directed towards achieving the aforementioned object, the present inventors have found: that a specific content of sulfur greatly contributes to the improvement of a refractive index and has little inhibitory effects on photocuring; and that a photocurable composition comprising a sulfur (a), an episulfide compound (b) and a photopolymerization initiator (c) exhibits photocurability, and a photocured product thereof exhibits a high refractive index. The present inventors have further found that a photocurable composition can be photocured in a shorter time by using a long wavelength light with a wavelength of 360 nm or more.

That is to say, the present invention is as follows.
[1] A photocurable composition comprising a sulfur (a) having a cyclic structure represented by the following formula (1), an episulfide compound (b), and a photopolymerization initiator (c), wherein the content of the sulfur (a) is 1 to 28 parts by mass, with respect to the total mass (100 parts by mass) of the sulfur (a) and the episulfide compound (b): 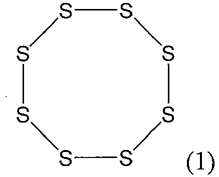
[2] The photocurable composition according to the above [1], which comprises a cyclic compound (d) represented by the following formula (2) in an amount of 80 parts by mass or less, with respect to the total mass (100 parts by mass) of the sulfur (a) and the episulfide compound (b): 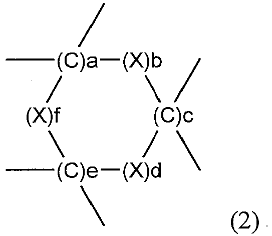 wherein C represents a carbon atom; X represents S, Se or Te; and a to f each represent an integer of 0 to 3, wherein 8 ≥ (a + c + e) ≥ 1, 8 ≥ (b + d + f) ≥ 2, and (b + d + f) ≥ (a + c + e).
[3] The photocurable composition according to the above [1] or [2], which comprises a thiol compound (e) in an amount of 0.1 to 20 parts by mass, with respect to the total mass (100 parts by mass) of the sulfur (a) and the episulfide compound (b).
[4] The photocurable composition according to the above [3], wherein the thiol compound (e) is at least one multifunctional thiol selected from the group consisting of compounds represented by the following formulae (3) to (5): 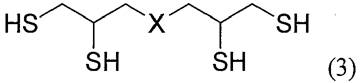 wherein X represents sulfide or disulfide, 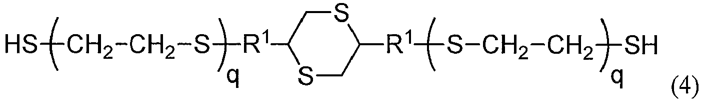 wherein q represents an integer of 0 to 3, and R¹ represents an alkylene group containing 0 to 3 carbon atoms, and 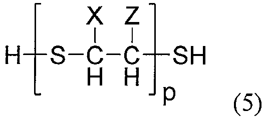 wherein p represents an integer of 2 to 4; and X and Z each independently represent a hydrogen atom, a mercapto group or a methylthiol group, and may also be a different group for each repeating unit, wherein at least one of X and Z in a molecule is a mercapto group or a methylthiol group.
[5] The photocurable composition according to any one of the above [1] to [4], which comprises an acid compound (f) in an amount of 0.001 to 1 part by mass, with respect to the total mass (100 parts by mass) of the sulfur (a) and the episulfide compound (b).
[6] The photocurable composition according to any one of the above [2] to [5], wherein, in the formula (2), X is S.
[7] The photocurable composition according to any one of the above [2] to [6], wherein the cyclic compound (d) is one or more selected from the group consisting of 1,2-dithiethane, trithiethane, 1,2-dithiolane, 1,2,3-trithiolane, 1,2,4-trithiolane, tetrathiolane, 1,2-dithiane, 1,2,3-trithiane, 1,2,4-trithiane, 1,3,5-trithiane, 1,2,3,4-tetrathiane, 1,2,4,5-tetrathiane, pentathian, 1,2,3-trithiepane, 1,2,4-trithiepane, 1,2,5-trithiepane, 1,2,3,4-tetrathiepane, 1,2,3,5-tetrathiepane, 1,2,4,5-tetrathiepane, 1,2,4,6-tetrathiepane, 1,2,3,4,5-pentathiepane, 1,2,3,4,6-pentathiepane, 1,2,3,5,6-pentathiepane, and hexathiepane.
[8] The photocurable composition according to any one of the above [1] to [7], which comprises the photopolymerization initiator (c) in an amount of 0.1 to 10 parts by mass, with respect to the total mass (100 parts by mass) of the sulfur (a) and the episulfide compound (b).
[9] The photocurable composition according to any one of the above [1] to [8], wherein the photopolymerization initiator (c) is a photobase generator.
[10] The photocurable composition according to any one of the above [1] to [9], wherein the episulfide compound (b) has a structure represented by the following formula (6): 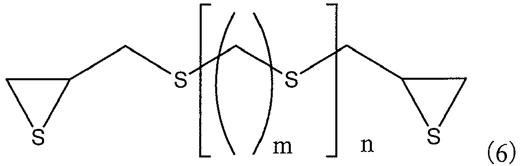 wherein m represents an integer of 0 to 4, and n represents an integer of 0 to 2.
[11] The photocurable composition according to any one of the above [1] to [10], which is formed by reacting a part or the entire of the sulfur with an amine compound.
[12] A cured product, which is formed by photocuring the photocurable composition according to any one of the above [1] to [11], using a light with a wavelength of 360 nm or more.
[13] The cured product according to the above [12], wherein the refractive index measured with sodium D line is 1.72 or more.
[14] An optical material, comprising the cured product according to the above [13].
[15] A method for producing a cured product, comprising a step of obtaining a cured product by photocuring the photocurable composition according to any one of the above [1] to [11], using a light with a wavelength of 360 nm or more.

### Advantageous Effects of Invention

Since the photocurable composition of the present invention has sufficient photocurability and the cured product thereof has a high refractive index (nD) of 1.72 or more, it has become possible to provide an optical material having high performance, using the present photocurable composition.

### Description of Embodiments

The photocurable composition of the present invention comprises a sulfur (a), an episulfide compound (b), and a photopolymerization initiator (c).

Hereafter, the sulfur (a), the episulfide compound (b) and the photopolymerization initiator (c) that are used as raw materials in the present invention, and compounds that can be added into the photocurable composition, will be described in detail.

The sulfur (a) used in the present invention is a sulfur having a cyclic structure represented by the following formula (1). The method of obtaining a sulfur (a) is not particularly limited. A commercially available product may be used as a sulfur (a), or such a sulfur (a) may be synthesized according to a known method.

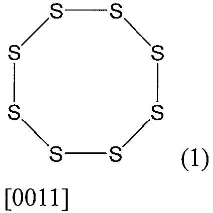

The ratio of the sulfur (a) in the present photocurable composition is 1 to 28 parts by mass, preferably 3 to 20 parts by mass, and particularly preferably 5 to 18 parts by mass, with respect to the total mass (100 parts by mass) of the sulfur (a) and the episulfide compound (b). When the content of the sulfur (a) exceeds 28 parts by mass, a photocured product obtained may become yellow in some cases.

The episulfide compound (b) used in the present invention includes all episulfide compounds.

Specific examples of the episulfide compound (b) may include, but are not limited to, a compound having a chain aliphatic skeleton, a compound having an aliphatic cyclic skeleton, and a compound having an aromatic skeleton, as described below.

The compound having a chain aliphatic skeleton may be a compound represented by the following formula (6): 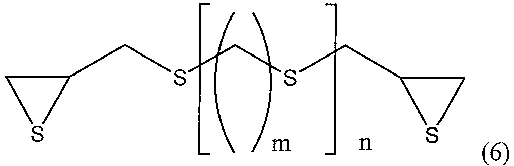 wherein m represents an integer of 0 to 4, and n represents an integer of 0 to 2.

Specific examples thereof may include bis(β-epithiopropyl)sulfide (in the above formula (6), n = 0), bis(β-epithiopropyl)disulfide (in the above formula (6), m = 0, and n = 1), bis(β-epithiopropylthio)methane (in the above formula (6), m = 1, and n = 1), 1,2-bis(β-epithiopropylthio)ethane (in the above formula (6), m = 2, and n = 1), 1,3-bis(β-epithiopropylthio)propane (in the above formula (6), m = 3, and n = 1), 1,4-bis(β-epithiopropylthio)butane (in the above formula (6), m = 4, and n = 1), and bis(β-epithiopropylthioethyl)sulfide (in the above formula (6), m = 2, and n = 2).

The compound having an aliphatic cyclic skeleton may be a compound represented by the following formula (7) or (8). 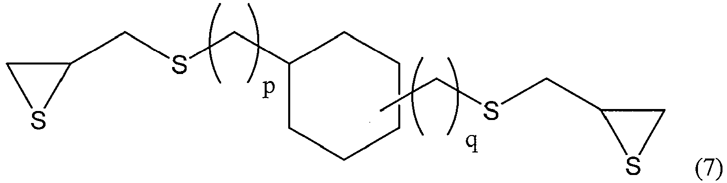 wherein p and q each independently represent an integer of 0 to 4.

Specific examples thereof may include 1,3 and 1,4-bis(β-epithiopropylthio)cyclohexane (in the above formula (7), p = 0, and q = 0), and 1,3 and 1,4-bis(β-epithiopropylthiomethyl)cyclohexane (in the above formula (7), p = 1, and q = 1). 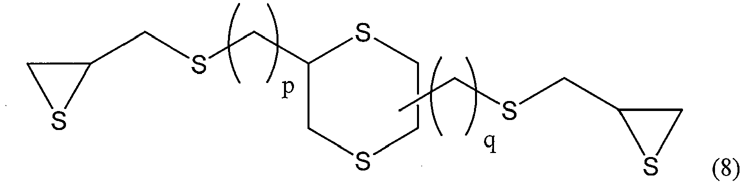 wherein p and q each independently represent an integer of 0 to 4.

Specific examples thereof may include 2,5-bis(β-epithiopropylthio)-1,4-dithiane (in the above formula (8), p = 0, and q = 0), and 2,5-bis(β-epithiopropylthioethylthiomethyl)-1,4-dithiane (in the above formula (8), p = 1, and q = 1).

The compound having an aromatic skeleton may be a compound represented by the following formula (9), (10), or (11). 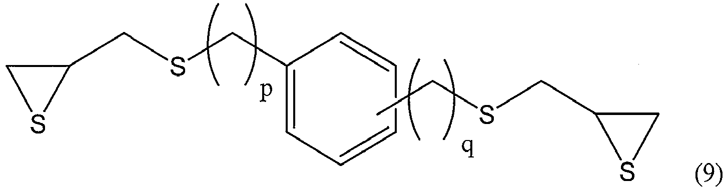 wherein p and q each independently represent an integer of 0 to 4.

Specific examples thereof may include 1,3 and 1,4-bis(β-epithiopropylthio)benzene (in the above formula (9), p = 0, and q = 0), and 1,3 and 1,4-bis(β-epithiopropylthiomethyl)benzene (in the above formula (9), p = 1, and q = 1). 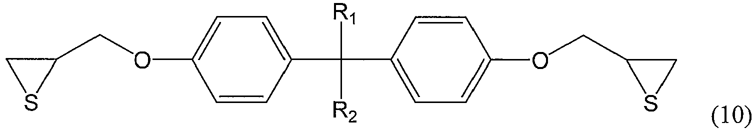 wherein R₁ and R₂ each independently represent a hydrogen atom, a methyl group, an ethyl group, or a phenyl group.

Specific examples thereof may include a bisphenol F-type episulfide compound, in which both R₁ and R₂ are hydrogen atoms, and a bisphenol A-type episulfide compound in which both R₁ and R₂ are methyl groups. 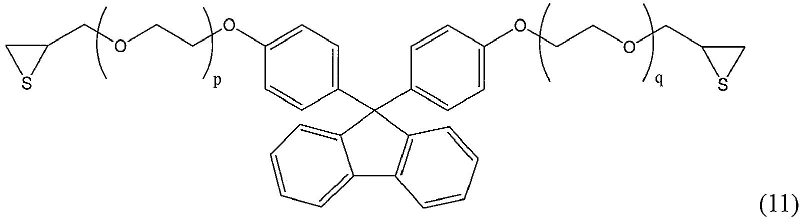 wherein p and q each independently represent an integer of 0 or 1.

Specific examples thereof may include a compound in which, in the above formula (11), p = 0 and q = 0, and a compound in which, in the above formula (11), p = 1 and q = 1.

These compounds may be used alone, or may also be used in the form of a mixture of two or more types. From the viewpoint of easy availability, the preferred compound is the compound having a chain aliphatic skeleton represented by the above formula (6), and the particularly preferred compounds are bis(β-epithiopropyl)sulfide (in the above formula (6), n = 0), and bis(β-epithiopropyl)disulfide (in the above formula (6), m = 0, and n = 1).

The method of obtaining an episulfide compound (b) is not particularly limited. A commercially available product may be used as an episulfide compound (b), or such an episulfide compound (b) may be synthesized according to a known method. For example, bis(P-epithiopropyl)sulfide (in the above formula (6), n = 0) can be synthesized according to a known technique (Japanese Patent No. 3491660).

The ratio of the episulfide compound (b) in the present photocurable composition is preferably 72 parts by mass or more, more preferably 80 to 97 parts by mass, and particularly preferably 82 to 95 parts by mass, with respect to the total mass (100 parts by mass) of the sulfur (a) and the episulfide compound (b). When the amount of the episulfide compound (b) is less than 72 parts by mass, the reaction of the episulfide compound (b) with the sulfur (a) may become insufficient in some cases.

The photopolymerization initiator (c) used in the present invention is not particularly limited, as long as it is capable of photocuring the episulfide compound (b). For example, a radical generator, an acid generator, a base generator, and the like can be used. Since a base catalyst exhibits the highest activity on polymerization of the episulfide compound (b), the use of a base generator is most desirable. Preferred specific examples of the photopolymerization initiator (c) may include tetrabutylammonium butyltriphenylborate, tetrabutylammonium butyltri(4-t-butylphenyl)borate, tetrabutylammonium butyltri(1-naphthyl)borate, and tetrabutylammonium butyltri(4-methyl-1-naphthyl)borate. Among these compounds, tetrabutylammonium butyltri(1-naphthyl)borate is most preferable because of solubility in the episulfide compound (b), polymerizability of the episulfide compound (b), and a good balance of the pot life of the composition. Other preferred examples of the photopolymerization initiator (c) may include compounds (photobase generators) that generate bases, including amidines such as DBN (diazabicyclononene) and DBU (diazabicycloundecene). In addition, a sensitizer can be added to the episulfide compound (b) of the present invention, and can be then used. By addition of a sensitizer, it becomes possible to carry out curing by irradiation with a low energy content of ultraviolet ray.

The ratio of the photopolymerization initiator (c) in the present photocurable composition is preferably 0.1 to 10 parts by mass, more preferably 0.1 to 3.0 parts by mass, and particularly preferably 0.2 to 1.0 parts by mass, with respect to the total mass (100 parts by mass) of the sulfur (a) and the episulfide compound (b). When the amount of the photopolymerization initiator (c) is less than 0.1 part by mass, photocurability may become low in some cases. In contrast, when the amount of the photopolymerization initiator (c) exceeds 10 parts by mass, the refractive index of a cured product may largely decrease in some cases.

The cyclic compound (d) preferably used in the present invention has a structure represented by the following formula (2): 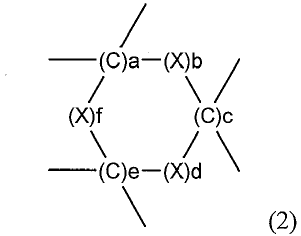 wherein C represents a carbon atom; X represents S, Se or Te; and a to f each represent an integer of 0 to 3, wherein 8 ≥ (a + c + e) ≥ 1, 8 ≥ (b + d + f) ≥ 2, and (b + d + f) ≥ (a + c + e).

From the viewpoint of availability and toxicity, X in the above formula (2) is preferably S or Se, and is more preferably S.

From the viewpoint of availability, a refractive index, and low inhibition to photoactivity, a to f satisfy the relationships of preferably 8 ≥ (a + c + e) ≥ 1, and 7 ≥ (b + d + f) ≥ 2, and more preferably 5 ≥ (a + c + e) ≥ 1, and 7 ≥ (b + d + f) ≥ 2. Further preferably, a to f also satisfy the relationship of (b + d + f) ≥ (a + c + e).

Further, in order to obtain a high refractive index, the sum of S, Se and Te in the cyclic compound (d) is preferably 50% by mass or more.

Specific examples of the cyclic compound (d) may include, but are not limited to, the following compounds:
dithiirane, 1,2-dithiethane, 1,3-dithiethane, trithiethane, 1,2-dithiolane, 1,3-dithiolane, 1,2,3-trithiolane, 1,2,4-trithiolane, tetrathiolane, 1,2-dithiane, 1,3-dithiane, 1,4-dithiane, 1,2,3-trithiane, 1,2,4-trithiane, 1,3,5-trithiane, 1,2,3,4-tetrathiane, 1,2,4,5-tetrathiane, bis(1,2,3,5,6-pentathiepano)methane, tris(1,2,3,5,6-pentathiepano)methane, 1,2-dithiepane, 1,3-dithiepane, 1,4-dithiepane, 1,2,3-trichiepane, 1,2,4-trichiepane, 1,2,5-trichiepane, 1,3,5-trichiepane, 1,2,3,4-tetrathiepane, 1,2,3,5-tetrathiepane, 1,2,4,5-tetrathiepane, 1,2,4,6-tetrathiepane, 1,2,3,4,5-pentathiepane, 1,2,3,4,6-pentathiepane, 1,2,3,5,6-pentathiepane, hexathiepane, dicelecyclobutane, tricelecyclobutane, dicelecyclopentane, tricelecyclopentane, tetracelecyclopentane, dicelecyclohexane, tricelecyclohexane, tetracelecyclohexane, pentacelecyclohexane, dicelecycloheptane, tricelecycloheptane, tetracelecycloheptane, pentacelecycloheptane, hexacelecycloheptane, ditellurocyclobutane, tritellurocyclobutane, ditellurocyclopentane, tritellurocyclopentane, tetratellurocyclopentane, ditellurocyclohexane, tritellurocyclohexane, tetratellurocyclohexane, pentatellurocyclohexane, ditellurocycloheptane, tritellurocycloheptane, tetratellurocycloheptane, pentatellurocycloheptane, hexatellurocycloheptane, and derivatives thereof having a cyclic skeleton structure (i.e. compounds, in which hydrogen atoms are converted to various substituents).

Preferred specific examples of the cyclic compound (d) may include compositions achieving a high refractive index that are easily obtained or synthesized, such as 1,2-dithiethane, trithiethane, 1,2-dithiolane, 1,2,3-trithiolane, 1,2,4-trithiolane, tetrathiolane, 1,2-dithiane, 1,2,3-trithiane, 1,2,4-trithiane, 1,3,5-trithiane, 1,2,3,4-tetrathiane, 1,2,4,5-tetrathiane, pentathian, 1,2,3-trithiepane, 1,2,4-trithiepane, 1,2,5-trithiepane, 1,2,3,4-tetrathiepane, 1,2,3,5-tetrathiepane, 1,2,4,5-tetrathiepane, 1,2,4,6-tetrathiepane, 1,2,3,4,5-pentathiepane, 1,2,3,4,6-pentathiepane, 1,2,3,5,6-pentathiepane, hexathiepane, and derivative thereof having a cyclic skeleton structure (i.e. compounds, in which hydrogen atoms are substituted with various substituents). From the viewpoint of solubility in the episulfide compound (b), the cyclic compound (d) is particularly preferably 1,2,4,5-tetrathiane or 1,2,3,5,6-pentathiepane.

The method of obtaining a cyclic compound (d) is not particularly limited. A commercially available product may be used as a cyclic compound (d), or such a cyclic compound (d) may also be collected and extracted from natural products such as crude oil, animals, plants, etc., or such a cyclic compound (d) may also be synthesized according to a known method.

Examples of the synthetic method may include the methods described in N. Takeda et al., Bull. Chem. Soc. Jpn., 68, 2757 (1995), F. Feher et al., Angew. Chem. Int. Ed., 7, 301 (1968), and G. W. Kutney et al., Can. J. Chem, 58, 1233 (1980).

The ratio of the cyclic compound (d) in the present photocurable composition is preferably 80 parts by mass or less, more preferably 12 to 75 parts by mass, and particularly preferably 20 to 70 parts by mass, with respect to the total mass (100 parts by mass) of the sulfur (a) and the episulfide compound (b). When the ratio of the cyclic compound (d) exceeds 80 parts by mass, a photocured product obtained may become yellow in some cases.

The structure of the thiol compound (e) that is preferably used in the present invention is not particularly limited. From the viewpoint of availability and the achievement of a photocurable composition having a high refractive index, multifunctional thiol compounds represented by the following formulae (3) to (5) are preferable. 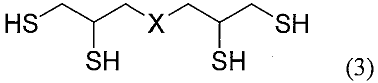 wherein X represents sulfide or disulfide. 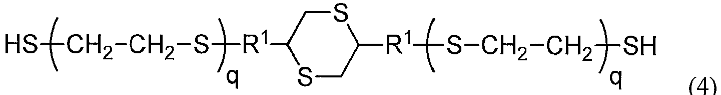 wherein q represents an integer of 0 to 3, and R¹ represents an alkylene group containing 0 to 3 carbon atoms. 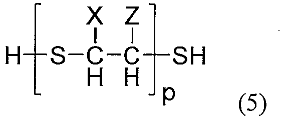 wherein p represents an integer of 2 to 4; and X and Z each independently represent a hydrogen atom, a mercapto group or a methylthiol group, and may also be a different group for each repeating unit, wherein at least one of X and Z in a molecule is a mercapto group or a methylthiol group.

Examples of the compound represented by the formula (3) may include 1,2,6,7-tetramercapto-4-thiaheptane and bis(2,3-dimercaptopropanyl)disulfide.

Examples of the compound represented by the formula (4) may include 2,5-dimercapto-1,4-dithiane, 2,5-dimercaptomethyl-1,4-dithiane, and 2,5-dimercaptoethyl-1,4-dithiane.

Examples of the compound represented by the formula (5) may include 1,5-dimercapto-3-thiapentane, 2-mercaptomethyl-1,5-dimercapto-3-thiapentane, 2,4-bis(mercaptomethyl)-1,5 -dimercapto-3 -thiapentane, 4-mercaptomethyl-1, 8-dimercapto-3,6-dithiaoctane, 4,8-bis(mercaptomethyl)-1,11-dimercapto-3,6,9-trithiaundecane, 4,7-bis(mercaptomethyl)-1,11-dimercapto-3,6,9-trithiaundecane, and 5,7-bis(mercaptomethyl)-1,11-dimercapto-3,6,9-trithiaundecane.

In the present invention, it is possible to improve the color tone of a photocured product by addition of the thiol compound (e) (Patent Literature 6). The additive amount of the thiol compound (e) is preferably 0.1 to 20 parts by mass, and more preferably 1 to 10 parts by mass, with respect to the total mass (100 parts by mass) of the sulfur (a) and the episulfide compound (b). When the additive amount of the thiol compound (e) is less than 0.1 part by mass, the color tone may not be sufficiently improved. When the additive amount of the thiol compound (e) exceeds 20 parts by mass, a cured product obtained may become soft.

Moreover, in the present invention, an acid compound (f) can be added to the photocurable composition. By addition of the acid compound (f), the usable time of the photocurable composition is prolonged. The acid compound (f) used in the present invention is not particularly limited, as long as it can be dissolved in the photocurable composition.

As such acid compounds (f), various types of protonic acids or Lewis acids can be used.

From the viewpoint of solubility in the composition solution, the protonic acid is particularly preferably organic acid having a sulfonic acid group, a carboxylic acid group, or a phosphoric acid group. Specific examples of the particularly preferred compound may include methanesulfonic acid, trifluoromethanesulfonic acid, benzenesulfonic acid, toluenesulfonic acid, dodecylbenzenesulfonic acid, camphorsulfonic acid, formic acid, acetic acid, propionic acid, butyric acid, benzoic acid, phthalic acid, oxalic acid, ethyl phosphate, diethyl phosphate, butyl phosphate, dibutyl phosphate, ethyl phosphate, diethyl phosphate, butoxyethyl phosphate, and dibutoxyethyl phosphate.

Specific examples of the compound that is preferable as Lewis acid may include dibutyltin dichloride, butyltin trichloride, dioctyltin dichloride, octyltin trichloride, dibutyl dichlorogermanium, butyl trichlorogermanium, diphenyl dichlorogermanium, phenyl trichlorogermanium, and triphenylantimony dichloride. The particularly preferred compound is dibutylin dichloride. The acid compound (f) may be used alone, or may also be used in the form of a mixture of two or more types.

The amount of the acid compound (f) used is preferably 0.001 to 1 part by mass, and more preferably 0.001 to 0.2 parts by mass, with respect to the total mass (100 parts by mass) of the sulfur (a) and the episulfide compound (b). When the additive amount is less than 0.001 part by mass, the stabilization effect may be small. When the additive amount is larger than 1 part by mass, photocurability may decrease in some cases.

Moreover, in the present invention, a sensitizer (g) can be added to the photocurable composition. By mixing the sensitizer (g) into the photocurable composition, it becomes possible to more efficiently release bases from the photopolymerization initiator (c). As a result, a reduction in the exposure time or promotion of polymerization of the photocurable composition can be achieved.

The preferred sensitizers (g) are aromatic ketones such as substituted or unsubstituted benzophenone, thioxanthone and anthraquinone, dyes such as oxazine, acridine, phenazine and rhodamine, and compounds having a conjugated heterocyclic ring, such as fluorene, fluorenone and naphthalene. The particularly preferred sensitizers (g) are substituted or unsubstituted benzophenone, thioxanthone, and fluorene.

Specific examples of the sensitizer (g) may include benzophenone, 4,4'-bis(dimethylamino)benzophenone, 4,4'-bis-(diethylamino)benzophenone, 4,4'-bis(ethylmethylamino)benzophenone, 4,4'-diphenylbenzophenone, 4,4'-diphenoxybenzophenone, 4,4'-bis(p-isopropylphenoxy)benzophenone, 4-methylbenzophenone, 2,4,6-trimethylbenzophenone, 4-phenylbenzophenone, 2-methoxycarbonylbenzophenone, 4-benzoyl-4'-methyldiphenyl sulfide, 4-methoxy-3,3'-methylbenzophenone, isopropylthioxanthone, chlorothioxanthone, 1-chloro-4-propoxythioxanthone, 2-(trifluoromethyl)thioxanthone, 2,4-dimethylthioxanthone 2,4-diethylthioxanthone, 1,3-dimethyl-2-(2-ethylhexyloxy)thioxanthone, fluorene, 9,9-dimethylfluorene, and 9,9-bis[4-(2-hydroxyethoxy)phenyl]fluorene. These compounds may be used alone, or may also be used in the form of a mixture of two or more types.

The amount of the sensitizer (g) used is preferably 0.05 to 10 parts by mass, more preferably 0.05 to 3 parts by mass, and most preferably 0.1 to 1 part by mass, with respect to the total mass (100 parts by mass) of the sulfur (a) and the episulfide compound (b).

Furthermore, for the purpose of improving various types of performances such as weather resistance, oxidation resistance, strength, surface hardness, adhesiveness to the substrate, a refractive index and stainability, epoxy compounds, iso(thio)cyanates, phenols, amines, etc. may be added to the photocurable composition of the present invention. In this case, known polymerization curing catalysts can be added, separately, as necessary. Furthermore, in order to produce the optical material of the present invention, thermosetting catalysts, antioxidants, bluing agents, ultraviolet absorbers, and additives for improving various performances, and the like can be added, as necessary. The amount of these additives is generally 0.0001 to 5 parts by mass, with respect to the total mass of the photocurable composition.

When the amount of the sulfur (a) is 7% by mass or more with respect to the total mass (100 parts by mass) of the sulfur (a) and the episulfide compound (b), it is preferable to add an amine compound to the photocurable composition to pre-react the sulfur, thereby improving the solubility of the sulfur. As amine compounds to be added, hindered amine compounds and imidazole compounds are preferable, and specific examples thereof may include 1-methyl-2,2,6,6-tetramethyl-4-piperidyl methacrylate and 2-mercapto-1-methyl-4,5-dihydroimidazole.

The photocurable composition of the present invention is cured by irradiation with an ultraviolet ray or a visible light. The light source used in the irradiation is not particularly limited, as long as it is a device that generates such an ultraviolet ray or a visible light. Specific examples of the light source used herein may include a high-pressure mercury lamp, an ultra-high-pressure mercury lamp, a metal halide lamp, a high-power metal halide lamp, a xenon lamp, and a light-emitting diode (ultraviolet LED). The use of a light source with a high luminescence intensity from 360 to 410 nm is preferable because the speed of curing the photocurable composition becomes high, and a light source with 380 nm or higher is more preferable. Moreover, the color tone of the photocured product can be improved by using a long-pass filter or the like to cut off a light with less than 360 nm.

There is a case where the polymerization of the photocurable composition of the present invention may be inhibited by oxygen in the air upon the photocuring thereof. Therefore, it is preferable to expose the photocurable composition of the present invention in an atmosphere with a low oxygen concentration in order to shorten the exposure time and to sufficiently polymerize the photocurable composition. Specific examples of the exposure method may include a method of replacing the atmosphere with inert gas such as nitrogen gas, argon gas or helium gas and then performing the exposure, and a method of performing the exposure under reduced pressure. The oxygen concentration upon the exposure is preferably 10% or less, and more preferably 5% or less.

Moreover, other examples of the exposure method may include a method of covering the surface of the photocurable composition with a transparent film such as a polypropylene film and then performing the exposure, and a method of injecting and sealing the photocurable composition into a transparent mold made of glass or the like, and then performing the exposure.

After irradiating the photocurable composition with an ultraviolet ray or a visible light, a heat treatment is carried out, so that curing can be further promoted. After completion of the irradiation with an ultraviolet ray, a heating temperature and a heating time can be selected, as appropriate, depending on the degree of curing required for the optical material. The heating temperature is preferably from room temperature to 150°C, and the heating time is preferably from 1 minute to 3 days.

The refractive index (nD) of the cured product of the present invention, which is measured with sodium D line, is preferably 1.72 or more, more preferably 1.73 or more, further preferably 1.74 or more, and particularly preferably 1.75 or more. As a method of measuring the refractive index in the present invention, the method described in the after-mentioned Examples can be adopted.

### Examples

Hereinafter, the present invention will be specifically described in the following examples, etc. However, these examples are not intended to limit the scope of the present invention.

It is to be noted that, in the following examples, 1,2,3,5,6-pentathiepane was synthesized according to the method described in the publication (H. C. Hansen et al., Tetrahedron, 41, 5145 (1985)); bis(β-epithiopropyl)sulfide was synthesized according to the method described in Japanese Patent No. 3491660; 1,2,6,7-tetramercapto-4-thiaheptane was synthesized according to the method described in Japanese Patent No. 4645979; 2,5-bis(mercaptomethyl)-1,4-dithiane was synthesized according to the method described in Japanese Patent No. 2895987; and polythiol comprising, as main ingredients, 4,8-dimercaptomethyl-1,11-dimercapto-3,6,9-trithiaundecane, 4,7-dimercaptomethyl-1,11-dimercapto-3,6,9-trithiaundecane, and 5,7-dimercaptomethyl-1,11-dimercapto-3,6,9-trithiaundecane was synthesized according to WO2007/129450. Moreover, tetrabutylammonium butyltri(1-naphthyl)borate was obtained from Showa Denko K. K., and was directly used. Regarding 4-benzoyl-4'-methyldiphenyl sulfide, Lunacure BMS (product name) was obtained from DKSH Japan, and was directly used. Sulfur was obtained from HOSOI CHEMICAL INDUSTRY CO., LTD., and was directly used.

### [Evaluation method]

As light sources used upon performing exposure on the photocurable composition, UV-LED light irradiation device 365 (manufactured by Phoseon Technology Japan; peak wavelength: 365 nm; light intensity: 600 mW/cm²), UV-LED light irradiation device 385 (manufactured by Phoseon Technology Japan; peak wavelength: 385 nm; light intensity: 600 mW/cm²), UV-LED light irradiation device 395 (manufactured by CCS, Inc.; peak wavelength: 395 nm; light intensity: 720 mW/cm²), and UV-LED light irradiation device 405 (manufactured by CCS, Inc.; peak wavelength: 405 nm; light intensity: 720 mW/cm²) were used. With regard to UV-LED light irradiation device 315, purchased LED (THORLABS, LED 315W) having a peak wavelength of 315 nm was arranged on a substrate, and a direct current was then applied thereto, so that the device was used as a UV irradiator.

The speed of curing the photocurable composition was evaluated based on the irradiation time required to reduce the amount of unreacted monomers to less than 5%, when the photocurable composition was sandwiched between two slide glasses (S9213, manufactured by Matsunami Glass Ind., Ltd.) to result in a thickness of 400 to 500 µm, and was then irradiated using a UV-LED light irradiation device. The amount of unreacted monomers was calculated from the peak area at a wave number of 610 cm⁻¹ of the spectrum obtained using an FT/IR measurement device (FT/IR-4200, manufactured by JASCO Corporation). The irradiation time of less than 1 minute was evaluated to be a curing speed "A," the irradiation time of 1 minute or more and less than 3 minutes was evaluated to be a curing speed "B," and the irradiation time of 3 minutes or more was evaluated to be a curing speed "C."

The refractive index (nD) of a cured product was measured as a value with sodium D line, using an Abbe's refractometer ("NAR-4T," manufactured by ATAGO CO., LTD.). A cured product to be measured was produced by sandwiching the photocurable composition, together with a spacer, between two slide glasses to result in a thickness of 400 to 500 µm, and then by irradiating the photocurable composition with a UV-LED light irradiation device for 5 minutes. The measurement temperature was set to be 20°C.

### [Example 1]

5 Parts by mass of a sulfur (hereinafter referred to as "Compound a-1") used as a sulfur (a); 95 parts by mass of bis(β-epithiopropyl)sulfide (hereinafter referred to as "Compound b-1") used as an episulfide compound (b); and with respect to the total mass (100 parts by mass) of these Compounds a-1 and b-1, 0.5 parts by mass of tetrabutylammonium butyltri(1-naphthyl)borate (hereinafter referred to as "Compound c-1") used as a photopolymerization initiator, and 0.5 parts by mass of 4-benzoyl-4'-methyldiphenyl sulfide (hereinafter referred to as "Compound g-1") used as a sensitizer, were mixed with one another, and the obtained mixture was then stirred at 30°C to obtain a homogeneous solution. The obtained solution was filtrated through a PTFE filter with a pore diameter of 0.45 µm to obtain a photocurable composition. This photocurable composition was sandwiched between two glass plates placed opposite to each other via a spacer having a thickness of 0.50 mm, and was then cured by light irradiation using UV-LED light irradiation device 365. Thereafter, the glass plates were removed to obtain a resin cured product. The evaluation results are shown in Table 1.

### [Example 2]

5.3 Parts by mass of Compound a-1 used as a sulfur; 94.7 parts by mass of Compound b-1 used as an episulfide compound; and with respect to the total mass (100 parts by mass) of these Compounds a-1 and b-1, 5.3 parts by mass of a mixture of 4,8-bis(mercaptomethyl)-1,11-dimercapto-3,6,9-trithiaundecane, 4,7-bis(mercaptomethyl)-1,11 -dimercapto-3,6,9-trithiaundecane and 5,7-bis(mercaptomethyl)-1,11-dimercapto-3,6,9-trithiaundecane (hereinafter referred to as "Compound e-1") used as a thiol compound (e), 0.5 parts by mass of tetrabutylammonium butyltri(1-naphthyl)borate (hereinafter referred to as "Compound c-1") used as a photopolymerization initiator, and 0.5 parts by mass of 4-benzoyl-4'-methyldiphenyl sulfide (hereinafter referred to as "Compound g-1") used as a sensitizer, were mixed with one another, and the obtained mixture was then stirred at 30°C to obtain a homogeneous solution. The obtained solution was filtrated through a PTFE filter with a pore diameter of 0.45 µm to obtain a photocurable composition. This photocurable composition was sandwiched between two glass plates placed opposite to each other via a spacer having a thickness of 0.50 mm, and was then cured by light irradiation using UV-LED light irradiation device 365. Thereafter, the glass plates were removed to obtain a resin cured product. The evaluation results are shown in Table 1.

### [Example 3]

A photocurable composition was produced and evaluated by the same method as that of Example 2. A resin cured product was obtained by the same method as that of Example 2, with the exception that the curing conditions shown in Table 1 were applied. The evaluation results are shown in Table 1.

### [Example 4]

12.6 Parts by mass of Compound a-1 used as a sulfur; 87.4 parts by mass of Compound b-1 used as an episulfide compound; and with respect to the total mass (100 parts by mass) of these Compounds a-1 and b-1, and 10 ppm of 1,2,2,6,6-pentamethyl-4-piperidyl methacrylate (hereinafter referred to as "LA-82") used as a pre-reaction catalyst were mixed with one another, and the obtained mixture was then stirred at 60°C for 5 hours to dissolve Compound a-1 and Compound b-1, thereby obtaining a homogeneous solution. Thereafter, this composition solution was cooled to 30°C, and with respect to the total mass (100 parts by mass) of these Compound a-1 and Compound b-1, 0.5 parts by mass of Compound c-1 used as a photopolymerization initiator, 0.5 parts by mass of Compound g-1 used as a sensitizer, and 5.3 parts by mass of Compound e-1 used as a thiol compound were added. The obtained mixture was stirred at 30°C to obtain a homogeneous solution. The obtained solution was filtrated through a PTFE filter with a pore diameter of 0.45 µm to obtain a photocurable composition. This photocurable composition was sandwiched between two glass plates placed opposite to each other via a spacer having a thickness of 0.50 mm, and was then cured by light irradiation using UV-LED light irradiation device 365. Thereafter, the glass plates were removed to obtain a resin cured product. The evaluation results are shown in Table 1.

### [Examples 5 and 6]

A photocurable composition was produced and evaluated by the same method as that of Example 4. A resin cured product was obtained by the same method as that of Example 4, with the exception that the curing conditions shown in Table 1 were applied. The evaluation results are shown in Table 1.

### [Example 7]

10.8 Parts by mass of Compound a-1 used as a sulfur; 89.2 parts by mass of Compound b-1 used as an episulfide compound; and with respect to the total mass (100 parts by mass) of these Compounds a-1 and b-1, 24.8 parts by mass of polythiol comprising a cyclic compound, 1,2,3,5,6-pentathiepane, as a main ingredient (hereinafter referred to as "Compound d-1"), 0.5 parts by mass of Compound c-1 used as a photopolymerization initiator, 0.5 parts by mass of Compound g-1 used as a sensitizer, and 10.0 parts by mass of Compound e-1 used as a thiol compound, were mixed with one another, and the obtained mixture was then stirred at 30°C to obtain a homogeneous solution. The obtained solution was filtrated through a PTFE filter with a pore diameter of 0.45 µm to obtain a photocurable composition. This photocurable composition was sandwiched between two glass plates placed opposite to each other via a spacer having a thickness of 0.50 mm, and was then cured by light irradiation using UV-LED light irradiation device 385. Thereafter, the glass plates were removed to obtain a resin cured product. The evaluation results are shown in Table 1.

### [Example 8]

10.8 Parts by mass of Compound a-1 used as a sulfur; 89.2 parts by mass of Compound b-1 used as an episulfide compound; and with respect to the total mass (100 parts by mass) of these Compounds a-1 and b-1, 24.8 parts by mass of polythiol comprising a cyclic compound, 1,2,3,5,6-pentathiepane, as a main ingredient (hereinafter referred to as "Compound d-1"), and 10 ppm of LA-82 used as a pre-reaction catalyst were mixed with one another. The obtained mixture was stirred at 60°C for 5 hours to dissolve Compound a-1, Compound b-1 and Compound d-1, thereby obtaining a homogeneous solution. Thereafter, this composition solution was cooled to 30°C, and with respect to the total mass (100 parts by mass) of these Compound a-1 and Compound b-1, 0.5 parts by mass of Compound c-1 used as a photopolymerization initiator, 0.5 parts by mass of Compound g-1 used as a sensitizer, and 10.0 parts by mass of Compound e-1 used as a thiol compound were added. The obtained mixture was stirred at 30°C to obtain a homogeneous solution. The obtained solution was filtrated through a PTFE filter with a pore diameter of 0.45 µm to obtain a photocurable composition. This photocurable composition was sandwiched between two glass plates placed opposite to each other via a spacer having a thickness of 0.50 mm, and was then cured by light irradiation using UV-LED light irradiation device 385. Thereafter, the glass plates were removed to obtain a resin cured product. The evaluation results are shown in Table 1.

### [Example 9]

A photocurable composition was produced and evaluated by the same method as that of Example 8, with the exception that the composition ratio shown in Table 1 was applied. The evaluation results are shown in Table 1.

### [Examples 10 and 11]

A photocurable composition was produced and evaluated by the same method as that of Example 9. A resin cured product was obtained by the same method as that of Example 8, with the exception that the curing conditions shown in Table 1 were applied. The evaluation results are shown in Table 1.

### [Examples 12 and 13]

A photocurable composition was produced and evaluated by the same method as that of Example 8, with the exception that the compounds and composition ratio shown in Table 1 were applied. A resin cured product was obtained by the same method as that of Example 8, with the exception that the curing conditions shown in Table 1 were applied. The evaluation results are shown in Table 1.

### [Example 14]

A photocurable composition was produced and evaluated by the same method as that of Example 8, with the exception that the composition ratio shown in Table 1 was applied. A resin cured product was obtained by the same method as that of Example 8, with the exception that the curing conditions shown in Table 1 were applied. The evaluation results are shown in Table 1.

### [Reference Example 1]

5.0 Parts by mass of Compound a-1 used as a sulfur; 95 parts by mass of Compound b-1 used as an episulfide compound; and with respect to the total mass (100 parts by mass) of these Compounds a-1 and b-1, 5.0 parts by mass of Compound e-1 used as a thiol compound (e), 0.5 parts by mass of Compound c-1 used as a photopolymerization initiator, and 0.5 parts by mass of Compound g-1 used as a sensitizer, were mixed with one another, and the obtained mixture was then stirred at 30°C to obtain a homogeneous solution. The obtained solution was filtrated through a PTFE filter with a pore diameter of 0.45 µm to obtain a photocurable composition. This photocurable composition was sandwiched between two glass plates placed opposite to each other via a spacer having a thickness of 0.50 mm, and was then cured by light irradiation using UV-LED light irradiation device 315. Thereafter, the glass plates were removed to obtain a resin cured product. The evaluation results are shown in Table 1.

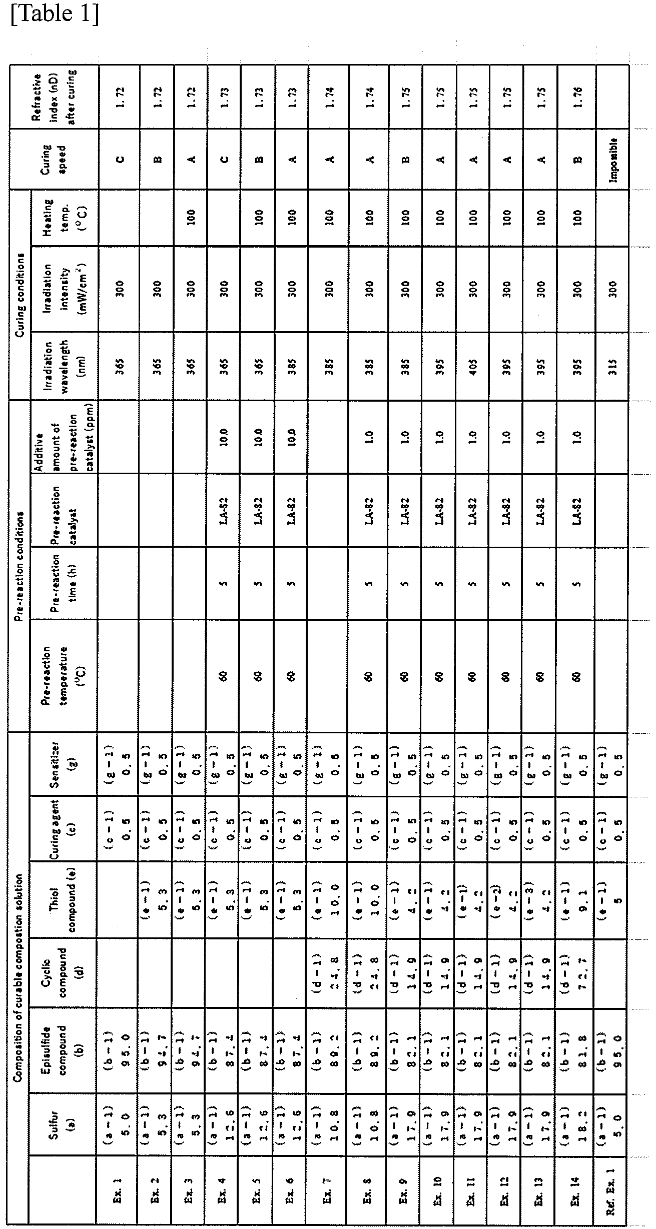

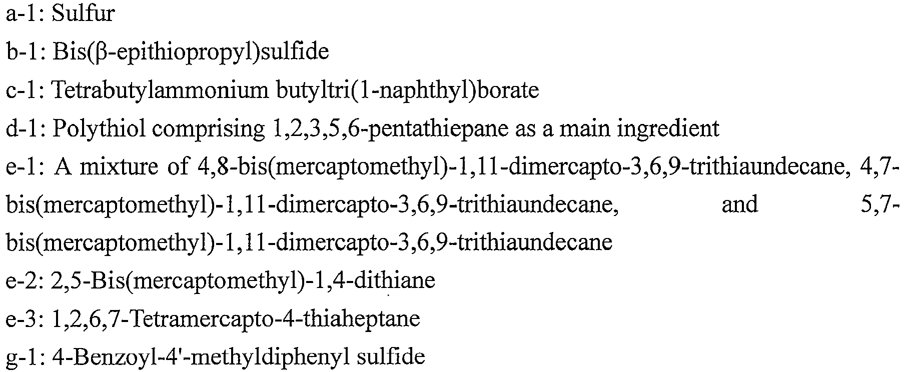

## Claims

1. A photocurable composition comprising a sulfur (a) having a cyclic structure represented by the following formula (1), an episulfide compound (b), and a photopolymerization initiator (c), wherein a content of the sulfur (a) is 1 to 28 parts by mass, with respect to a total mass (100 parts by mass) of the sulfur (a) and the episulfide compound (b):

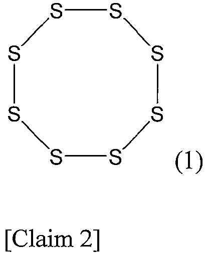

2. The photocurable composition according to claim 1, which comprises a cyclic compound (d) represented by the following formula (2) in an amount of 80 parts by mass or less, with respect to a total mass (100 parts by mass) of the sulfur (a) and the episulfide compound (b): 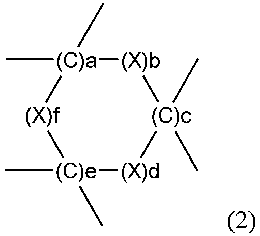 wherein C represents a carbon atom; X represents S, Se or Te; and a to f each represent an integer of 0 to 3, wherein 8 ≥ (a + c + e) ≥ 1, 8 ≥ (b + d + f) ≥ 2, and (b + d + f) ≥ (a + c + e).

3. The photocurable composition according to claim 1 or 2, which comprises a thiol compound (e) in an amount of 0.1 to 20 parts by mass, with respect to a total mass (100 parts by mass) of the sulfur (a) and the episulfide compound (b).

4. The photocurable composition according to claim 3, wherein the thiol compound (e) is at least one multifunctional thiol selected from the group consisting of compounds represented by the following formulae (3) to (5): 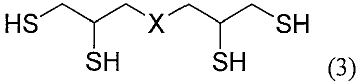 wherein X represents sulfide or disulfide, 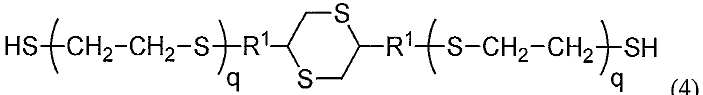 wherein q represents an integer of 0 to 3, and R¹ represents an alkylene group containing 0 to 3 carbon atoms, and 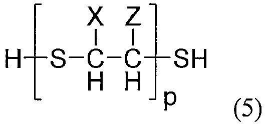 wherein p represents an integer of 2 to 4; and X and Z each independently represent a hydrogen atom, a mercapto group or a methylthiol group, and may also be a different group for each repeating unit, wherein at least one of X and Z in a molecule is a mercapto group or a methylthiol group.

5. The photocurable composition according to any one of claims 1 to 4, which comprises an acid compound (f) in an amount of 0.001 to 1 part by mass, with respect to a total mass (100 parts by mass) of the sulfur (a) and the episulfide compound (b).

6. The photocurable composition according to any one of claims 2 to 5, wherein, in the formula (2), X is S.

7. The photocurable composition according to any one of claims 2 to 6, wherein the cyclic compound (d) is one or more selected from the group consisting of 1,2-dithiethane, trithiethane, 1,2-dithiolane, 1,2,3-trithiolane, 1,2,4-trithiolane, tetrathiolane, 1,2-dithiane, 1,2,3-trithiane, 1,2,4-trithiane, 1,3,5-trithiane, 1,2,3,4-tetrathiane, 1,2,4,5-tetrathiane, pentathian, 1,2,3-trithiepane, 1,2,4-trithiepane, 1,2,5-trithiepane, 1,2,3,4-tetrathiepane, 1,2,3,5-tetrathiepane, 1,2,4,5-tetrathiepane, 1,2,4,6-tetrathiepane, 1,2,3,4,5-pentathiepane, 1,2,3,4,6-pentathiepane, 1,2,3,5,6-pentathiepane, and hexathiepane.

8. The photocurable composition according to any one of claims 1 to 7, which comprises the photopolymerization initiator (c) in an amount of 0.1 to 10 parts by mass, with respect to a total mass (100 parts by mass) of the sulfur (a) and the episulfide compound (b).

9. The photocurable composition according to any one of claims 1 to 8, wherein the photopolymerization initiator (c) is a photobase generator.

10. The photocurable composition according to any one of claims 1 to 9, wherein the episulfide compound (b) has a structure represented by the following formula (6): 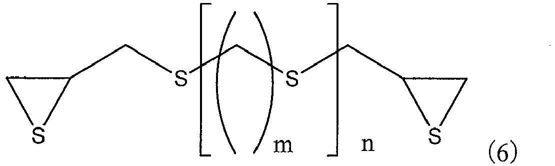 wherein m represents an integer of 0 to 4, and n represents an integer of 0 to 2.

11. The photocurable composition according to any one of claims 1 to 10, which is formed by reacting a part or the entire of the sulfur with an amine compound.

12. A cured product, which is formed by photocuring the photocurable composition according to any one of claims 1 to 11, using a light with a wavelength of 360 nm or more.

13. The cured product according to claim 12, wherein a refractive index measured with sodium D line is 1.72 or more.

14. An optical material, comprising the cured product according to claim 13.

15. A method for producing a cured product, comprising a step of obtaining a cured product by photocuring the photocurable composition according to any one of claims 1 to 11, using a light with a wavelength of 360 nm or more.
